# FASCICULE DE BREVET EUROPEEN

(11) **EP 2 381 125 B1**
(45) Date de publication et mention de la délivrance du brevet: **20.06.2012**
(21) Numéro de dépôt: 11161094.5
(22) Date de dépôt: 05.04.2011
(51) Int. Cl.: F16F 7/12, F16F 7/14, E01F 7/04

(54) **Dispositif de dissipation d'énergie pour un câble et installation comprenant un tel dispositif**
Energieaufnahmevorrichtung für ein Kabel, und mit einer solchen Vorrichtung ausgestattete Anlage
Device for dissipating energy for a cable and facility including such a device

(30) Priorité: 21.04.2010 FR 1053047
(43) Date de publication de la demande: 26.10.2011
(73) Titulaire: Géotechnique et Travaux Spéciaux, 69800 Saint Priest (FR)
(72) Inventeur: Forgeot, Alain, 69230 Saint Genis Laval (FR); Robit, Philippe, 38450 Norte Dame de Commièrs (FR); Limam, Ali, 69100 Villeurbanne (FR); Trad, Ayman, 69009 Lyon (FR)
(74) Mandataire: Maureau, Philippe

(56) Documents cités:
- WO-A1-2005/002676
- FR-A1- 2 673 253
- FR-A5- 2 199 268
- US-A- 3 409 327

## Description

La présente invention se rapporte à un dispositif de dissipation d'énergie pour un câble sollicité en traction.

Les installations de protection implantées dans des terrains en pentes pour protéger les zones situées en aval contre les chutes de pierres, par exemple, sont souvent soutenues par des câbles. Dans de telles installations il est primordial que les câbles puissent absorber une partie de l'énergie cinétique engendrée par des chutes de pierres, sans rompre. En effet, une rupture de câble mettrait en péril l'installation de protection.

De façon traditionnelle, afin d'augmenter la capacité d'absorption d'énergie des installations, il est connu d'utiliser des plaques de frottement fixées sur une portion d'un câble conformé en boucle d'amortissement. Lorsqu'une traction dépassant une valeur seuil est appliquée sur le câble, celui-ci glisse avec frottements sur la plaque de frottement et la longueur de la boucle diminue pour absorber une partie de l'énergie cinétique. De telles boucles sont, par exemple, décrites dans le document US 5 435 524. Avec le temps et les conditions atmosphériques, la valeur seuil de la traction peut varier considérablement, si bien que le comportement d'une boucle d'amortissement devient imprévisible. De plus, lorsqu'un premier déplacement du câble s'est produit dans une plaque de frottement, les mises en action ultérieures deviennent aléatoires.

Le document EP 1 302 595 décrit un dissipateur d'énergie permettant d'absorber de l'énergie cinétique par déchirement d'un élément tubulaire dans lequel le câble fait un aller et retour. Un tel dissipateur d'énergie permet de garantir un comportement fiable dans le temps, indépendamment des conditions atmosphériques. Cependant, un tel dissipateur d'énergie implique d'importants cisaillements du câble sur au moins un des bords de l'élément tubulaire qui sont susceptibles d'engendrer une usure ou une rupture du câble. Par ailleurs, seule une faible partie des forces de traction exercées sur le câble est effectivement transmise au dissipateur, en particulier en raison des angles importants des renvois formés par le câble dans un tel dissipateur

Par ailleurs, le document FR2199268 décrit un absorbeur pour ceinture de sécurité de véhicules; des sangles sont utilisées pour ce dispositif absorbeur de chocs; la déformation plastique de l'élément de structure se fait par le déplacement de deux tiges dans une rainure.

La présente invention a pour objet de remédier en tout ou partie aux différents inconvénients cités précédemment. Dans ce contexte technique, la présente invention a pour objet de proposer un dispositif de dissipation d'énergie pour un câble sollicité en traction garantissant un comportement fiable, sans risque de rupture du câble et qui améliore la transmission des efforts de traction du câble vers le dispositif de dissipation d'énergie.

A cet effet, la présente invention se rapporte à un dispositif de dissipation d'énergie pour un câble sollicité en traction, comprenant :
- un élément de structure conçu pour subir une déformation plastique lorsqu'il est soumis à un effort de compression dépassant une valeur seuil prédéterminée ;
- un premier moyen de guidage et de renvoi destiné à guider et dévier le câble ;
le dispositif étant caractérisé en ce qu'il comporte en outre au moins un deuxième moyen de guidage et de renvoi, destiné à guider et dévier le câble, les premier et deuxième moyens de guidage et de renvoi étant maintenus distants l'un de l'autre par l'élément de structure et disposés de façon à faire décrire au moins une boucle au câble, de sorte qu'une partie des forces générées par une traction sur le câble soit transmise à l'élément de structure par les premier et deuxième moyens de guidage et de renvoi sous la forme d'un effort de compression apte à provoquer un flambage de l'élément de structure entraînant le rapprochement des premier et deuxième moyens de guidage et de renvoi.

La présente invention concerne également une installation comportant un dispositif selon l'invention et un câble guidé par les premier et deuxième moyens de guidage et de renvoi, de sorte qu'une traction sur le câble génère un effort de compression transmis à l'élément de structure par les premier et deuxième moyens de guidage et de renvoi.

Ainsi, un dispositif de dissipation d'énergie selon l'invention permet d'obtenir une installation selon l'invention dont le fonctionnement est garanti et fiable : la dissipation d'énergie est obtenue par la déformation plastique de l'élément de structure, et plus particulièrement par flambage. Cette déformation est maitrisée par la disposition des premier et deuxième moyens de guidage et de renvoi et permet d'obtenir une dissipation progressive. Une déformation ultérieure succédant à une première déformation peut être modélisée. Leurs positions respectives par rapport à l'élément de structure permettent d'obtenir une installation dans laquelle le câble forme au moins une boucle autour des premier et deuxième moyens de guidage et de renvoi. Une telle boucle est particulièrement adaptée pour transmettre une partie des forces générées par cette traction à l'élément de structure sous forme d'un effort de compression. En effet, la traction sur le câble tend à faire diminuer la longueur de la boucle et à rapprocher les premier et deuxième moyens de guidage et de renvoi, tandis que l'élément de structure s'oppose à ce rapprochement tant que l'effort de compression ne dépasse pas une valeur seuil prédéterminée. En formant au moins une boucle, le câble dans l'installation ne présente pas de renvoi avec des angles importants et les cisaillements susceptibles d'user le câble sont minimisés. De plus, chaque boucle formée par le câble permet d'augmenter la longueur d'allongement entre les deux extrémités du câble d'un facteur 2 par rapport au dissipateur d'énergie décrit précédemment. Enfin, lors de la déformation plastique de l'élément de structure, le rapprochement des premier et deuxième moyens de guidage et de renvoi implique une meilleure transmission d'énergie vers l'élément de structure par effet de mouflage du câble. Avantageusement, l'effet de mouflage engendre un facteur 0,5 entre l'effort de compression subi par l'élément de structure et les forces générées par la traction sur le câble. Ainsi, le dimensionnement de l'élément de structure peut être facilement ajusté pour garantir une capacité d'absorption adéquate du dispositif.

Dans un mode d'exécution, l'élément de structure est cylindrique et creux. La déformation d'un tel élément de structure est facilement modélisable et permet d'ajuster la valeur seuil prédéterminée.

Selon une possibilité, le premier et le deuxième moyens de guidage et de renvoi sont fixés respectivement aux extrémités de l'élément de structure.Les premier et le deuxième moyens de guidage et de renvoi étant fixés aux extrémités de l'élément de structure sans aucun degrés de liberté, le mouvement relatif entre les premier et deuxième moyens de guidage et leur extrémité respective de l'élément de structure est nul même lorsque l'élément de structure subit un effort de compression.

Dans ces conditions, le dispositif dissipe l'énergie cinétique non pas par frottement entre les moyens de guidage et de renvoi et l'élément de structure mais par flambage de l'élément de structure.

Selon une caractéristique, les premier et deuxième moyens de guidage et de renvoi sont disposés à l'extérieur de l'élément de structure.

Selon une possibilité, l'élément de structure est dimensionné de façon à permettre le passage d'au moins un brin du câble à l'intérieur de l'élément de structure.

Selon une caractéristique, l'élément de structure présente une section sensiblement carrée.

Dans un mode d'exécution, le premier et/ou le deuxième moyens de guidage et de renvoi comportent respectivement un premier et/ou un deuxième axe de guidage et de renvoi. Un axe de guidage et de renvoi permet de contrôler les angles formés par le câble dans l'installation et d'éviter les cisaillements du câble.

Selon une possibilité, chaque axe de guidage et de renvoi comporte un orifice traversant dimensionné pour permettre le passage du câble. Ainsi, le brin du câble en amont de la boucle et le brin du câble en aval de la boucle sont introduits dans ces orifices traversant afin de s'assurer que chaque boucle reste formée durant la déformation de l'élément de structure.

Dans un mode d'exécution de l'installation, lorsque l'élément de structure est cylindrique et creux, le câble décrit au moins une boucle à l'intérieur de l'élément de structure et s'étend à l'extérieur de l'élément de structure depuis chacune des ses extrémités.

L'invention sera bien comprise à l'aide de la description détaillée qui est exposée ci-dessous en regard du dessin annexé, représentant à titre d'exemple non limitatif une forme de réalisation d'un dissipateur d'énergie, dans lequel :
La figure 1 est une vue de côté d'une installation avant déformation de l'élément de structure ;
La figure 2 est une vue en coupe longitudinale de l'installation de la figure 1 ;
la figure 3 est une vue de côté de l'installation de la figure 1, après une déformation plastique de l'élément de structure.

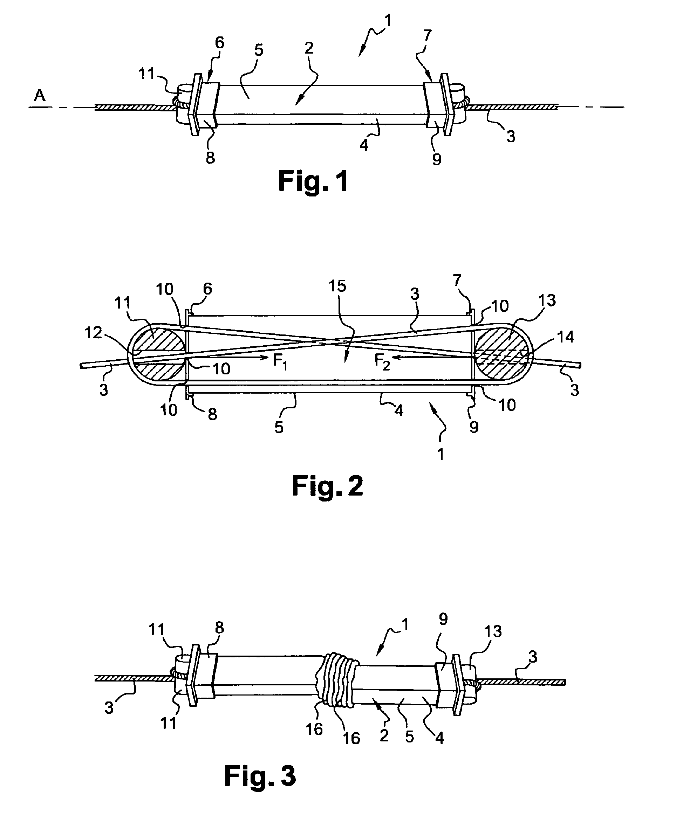

Une installation 1, illustrée à la figure 1, comporte un dispositif 2 de dissipation d'énergie et un câble 3 destiné à être sollicité en traction. Le dispositif 2 est destiné à absorber une énergie cinétique engendrée par une force de traction du câble 3.

Le dispositif 2 comprend un élément de structure 4 conçu pour subir une déformation plastique lorsqu'il est soumis à un effort de compression dépassant une valeur seuil prédéterminée. Dans le mode d'exécution illustré à la figure 1, l'élément de structure 4 comprend un cylindre 5 métallique creux, s'étendant selon une axe longitudinal A, de section sensiblement carrée et dimensionné pour permettre le passage d'au moins un brin du câble 2 à l'intérieur du cylindre 5.

A chacune des extrémités 6, 7 de l'élément de structure 4, le cylindre 5 est muni d'un manchon d'obturation 8, 9. Chaque manchon d'obturation 8, 9 comporte au moins trois ouvertures 10 pour permettre chacune le passage d'un brin du câble 3.

Le dispositif 2 comprend également un premier moyen de guidage et de renvoi destiné à guider et dévier le câble 3, réalisé sous la forme d'un premier axe 11 de guidage et de renvoi. Le premier axe 11 de guidage et de renvoi présente un orifice traversant 12 s'étendant sensiblement selon un rayon dudit premier axe 11 de guidage et de renvoi et dimensionné pour permettre le passage d'un brin du câble 3. Le dispositif 2 comprend également un deuxième moyen de guidage et de renvoi, destiné à guider et dévier le câble 3, réalisé sous la forme d'un deuxième axe 13 de guidage et de renvoi, également muni d'un orifice traversant 14 s'étendant sensiblement selon un rayon dudit deuxième axe 13 de guidage et de renvoi , dimensionné pour permettre le passage d'un brin du câble 3.

Dans l'installation 1, les premier et deuxième axes 11, 13 de guidage et de renvoi sont orientés de façon à s'étendre perpendiculairement à l'axe longitudinal A de l'élément de structure 4.

Les premier et deuxième axes 11, 13 de guidage et de renvoi sont disposés à l'extérieur de l'élément de structure 4, et fixés à chacune des extrémités 6, 7 de celui-ci. Le câble 3 de l'installation 1 s'étend à partir de chacune des extrémités 6, 7 de l'élément de structure 4. Avantageusement, les orifices traversant 12, 14 des premier et deuxième axes 11, 13 de guidage et de renvoi sont orientés de façon à s'étendre selon des axes respectifs sensiblement parallèles à l'axe longitudinal A de l'élément de structure 4, afin de permettre au câble 3 de s'étendre sensiblement parallèlement à l'axe longitudinal A au voisinage du dispositif 2.

Dans l'installation 1, les premier et deuxième axes 11, 13 de guidage et de renvoi sont maintenus distants l'un de l'autre par l'élément de structure 4 et viennent en appui sur chaque manchon d'obturation 8, 9. De façon alternative, non illustrée, les axes de guidage et de renvoi 11, 13 peuvent être solidaires de l'élément de structure 4. Il est également envisagé de remplacer les premier et deuxième axes 11, 13 de guidage et de renvoi par des poulies fixées à chacune des extrémités 6, 7 de l'élément de structure 4.

Dans l'installation 1, le câble 3, associé au dispositif 2, décrit au moins une boucle 15, illustrée à la figure 2, à l'intérieur de l'élément de structure 4. Chaque boucle 15 présente une longueur qui dépend de la distance entre les premier et deuxième axes 11, 13 de guidage et de renvoi.

Lorsque le câble 3 est sollicité en traction, chaque boucle 15 du câble 3 transmet une partie des forces générées par cette traction sur le câble 3, représentées sur la figure 2 par les flèches F1 et F2, à l'élément de structure 4 par l'intermédiaire des premier et deuxième axes 11, 13 de guidage et de renvoi, sous la forme d'un effort de compression.

Lorsque l'effort de compression dépasse une valeur seuil prédéterminée, cet effort de compression entraîne le flambage de l'élément de structure 4 de sorte que les extrémités 6, 7 se rapprochent l'une de l'autre, et par la même les premier et deuxième axes 11, 13 fixés sur ces extrémités 6, 7 se rapprochent l'une de l'autre également..

La figure 3 illustre l'installation 1 après une déformation plastique de l'élément de structure 4. A la suite d'une traction sur le câble 3 ayant engendré un effort de compression ayant dépassé une valeur seuil prédéterminée, l'élément de structure 4 subit une déformation par flambage et/ou compression provoquant des plis de compression 16, illustrés à la figure 3, qui ont pour conséquence de rapprocher les deux extrémités 6, 7 de l'élément de structure 4 et les premier et deuxième axes 11, 13 de guidage et de renvoi. En se rapprochant, la longueur de chaque boucle 15 formée par le câble 3 diminue, permettant de diminuer la traction subie par le câble 3 et donc de dissiper une certaine quantité d'énergie. Avantageusement, lors du rapprochement des premier et deuxième axes 11, 13 de guidage et de renvoi d'une distance d consécutivement à la déformation de l'élément de structure 4, la distance entre deux points du câble 3 situées respectivement de chaque côté du dispositif 2 est augmentée d'une valeur égale à 2d pour chaque boucle 15 formée par le câble 3.

Ainsi, le dispositif 2 de dissipation d'énergie selon l'invention permet d'obtenir une installation 1 dont le fonctionnement est garanti et fiable : la dissipation d'énergie est obtenue par la déformation plastique de l'élément de structure 4. Cette déformation est maitrisée par la disposition des premier et deuxième axes 11, 13 de guidage et de renvoi. Leurs positions respectives par rapport à l'élément de structure 4 permettent d'obtenir une installation 1 dans laquelle le câble 3 forme au moins une boucle 15 autour de ces axes 11, 13 de guidage et de renvoi. De telles boucles 15 sont particulièrement adaptées pour transmettre une partie des forces générées par cette traction à l'élément de structure 4 sous la forme d'un effort de compression. En formant au moins une boucle 15, le câble 3 dans l'installation 1 ne présente pas de renvoi avec des angles importants et les cisaillements susceptibles d'user le câble 3 sont minimisés. Lors de la déformation plastique de l'élément de structure 4, le rapprochement des premier et deuxième axes 11, 13 de guidage et de renvoi implique une meilleure transmission d'énergie vers l'élément de structure 4 par effet de mouflage du câble 3.

Bien entendu, les exemples de réalisation évoqués ci-dessus ne présentent aucun caractère limitatif et d'autres détails et améliorations peuvent être apportés au dispositif 2 de dissipation d'énergie ou à l'installation 1 selon l'invention, sans pour autant sortir du cadre de l'invention où d'autres formes de dispositif ou d'installation peuvent être réalisées.

## Revendications

1. Dispositif (2) de dissipation d'énergie pour un câble (3) sollicité en traction, comprenant :
- un élément de structure (4) conçu pour subir une déformation plastique lorsqu'il est soumis à un effort de compression dépassant une valeur seuil prédéterminée ;
- un premier moyen de guidage et de renvoi destiné à guider et dévier le câble (3);
le dispositif (2) étant **caractérisé en ce qu'**il comporte en outre au moins un deuxième moyen de guidage et de renvoi, destiné à guider et dévier le câble (3), les premier et deuxième moyens de guidage et de renvoi étant maintenus distants l'un de l'autre par l'élément de structure (4) et disposés de façon à faire décrire au moins une boucle (15) au câble (3), de sorte qu'une partie des forces générées par une traction sur le câble (3) soit transmise à l'élément de structure (4) par les premier et deuxième moyens de guidage et de renvoi sous la forme d'un effort de compression apte à provoquer un flambage de l'élément de structure (4) entraînant le rapprochement des premier et deuxième moyens de guidage et de renvoi.

2. Dispositif (2) selon la revendication 1, **caractérisé en ce que** l'élément de structure (4) est cylindrique et creux.

3. Dispositif (2) selon la revendication 2, **caractérisé en ce que** le premier et le deuxième moyens de guidage et de renvoi sont fixés respectivement aux extrémités (6, 7) de l'élément de structure (4).

4. Dispositif (2) selon la revendication 3, **caractérisé en ce que** les premier et deuxième moyens de guidage et de renvoi sont disposés à l'extérieur de l'élément de structure (4).

5. Dispositif (2) selon l'une des revendications 2 à 4, **caractérisé en ce que** l'élément de structure (4) est dimensionné de façon à permettre le passage d'au moins un brin du câble (3) à l'intérieur de l'élément de structure (4).

6. Dispositif (2) selon l'une des revendications 2 à 5, **caractérisé en ce que** l'élément de structure (4) présente une section sensiblement carrée.

7. Dispositif (2) selon l'une des revendications 1 à 6, **caractérisé en ce que** le premier et/ou le deuxième moyens de guidage et de renvoi comportent respectivement un premier et/ou un deuxième axe de guidage et de renvoi (11, 13).

8. Dispositif (2) selon la revendication 7, **caractérisé en ce que** chaque axe de guidage et de renvoi (11, 13) comporte un orifice traversant (12, 14) dimensionné pour permettre le passage du câble (3).

9. Installation (1) comportant un dispositif selon l'une quelconque des revendications 1 à 8 et un câble (3) guidé par les premier et deuxième moyens de guidage et de renvoi de sorte qu'une traction sur le câble (3) génère un effort de compression transmis à l'élément de structure (4) par les premier et deuxième moyens de guidage et de renvoi.

10. Installation (1) selon la revendication 9, en combinaison avec la revendication 2, **caractérisée en ce que** le câble (3) décrit au moins une boucle (15) à l'intérieur de l'élément de structure (4) et s'étend à l'extérieur de l'élément de structure (4) depuis chacune de ses extrémités (6, 7).

## Claims

1. An energy dissipating device (2) for a cable (3) loaded in tension, comprising:
- a structure element (4) designed to undergo plastic deformation when it is subject to a compressive force exceeding a predetermined threshold value;
- a first guiding and returning means intended to guide and divert the cable (3);
the device (2) being **characterized in that** it further includes at least one second guiding and returning means, intended to guide and divert the cable (3), the first and second guiding and returning means being maintained at a distance from each other by the structure element (4) and positioned so as to have the cable (3) follow at least one loop (15), so that a portion of the forces generated by traction on the cable (3) is transmitted to the structure element (4) by the first and second guiding and returning means in the form of a compressive force capable of causing buckling of the structure element (4) causing the first and second guiding and returning means to move closer to each other.

2. The device (2) according to claim 1, **characterized in that** the structure element(4) is cylindrical and hollow.

3. The device (2) according to claim 2, **characterized in that** the first and second guiding and returning means are respectively attached to the ends (6, 7) of the structure element (4).

4. The device (2) according to claim 3, **characterized in that** the first and second guiding and returning means are arranged on the outside of the structure element (4).

5. The device (2) according to one of claims 2 to 4, **characterized in that** the structure element (4) is proportioned so as to allow the passage of at least one strand of the cable (3) inside the structure element (4).

6. The device (2) according to one of claims 2 to 5, **characterized in that** the structure element (4) has a substantially square section.

7. The device (2) according to one of claims 1 to 6, **characterized in that** the first and/or the second guiding and returning means respectively include a first and/or a second guiding and returning axis (11, 13).

8. The device (2) according to claim 7, **characterized in that** each guiding and returning axis (11, 13) includes a through-orifice (12, 14) proportioned so as to allow passage of the cable (3).

9. An installation (1) including a device according to any of claims 1 to 8 and a cable (3) guided by the first and second guiding and returning means so that a traction on the cable (3) generates a compressive force transmitted to the structure element (4) by the first and second guiding and returning means.

10. The installation (1) according to claim 9 in combination with claim 2, **characterized in that** the cable (3) follows at least one loop (15) inside the structure element (4), and extends on the outside of the structure element (4) from each of its ends (6,7).

## Patentansprüche

1. Vorrichtung (2) zur Energiedissipation für ein Kabel (3) mit Zugbeanspruchung, die umfasst:
- ein Strukturelement (4), das ausgebildet ist, um sich plastisch zu verformen, wenn es einer Kompressionsbeanspruchung ausgesetzt wird, die einen vorbestimmten Grenzwert überschreitet,
- ein erstes Führungs- und Umlenkmittel, das dazu bestimmt ist, das Kabel (3) zu führen und umzulenken,
wobei die Vorrichtung (2) **dadurch gekennzeichnet ist, dass** sie ferner mindestens ein zweites Führungs- und Umlenkmittel aufweist, das dazu bestimmt ist, das Kabel (3) zu führen und umzulenken, wobei das erste und zweite Führungs- und Umlenkmittel von dem Strukturelement (4) voneinander beabstandet gehalten werden und derart angeordnet sind, dass sie bewirken, dass das Kabel (3) mindestens eine Schleife (15) beschreibt, so dass ein Teil der Kräfte, die von einem Zug auf das Kabel (3) generiert werden, von dem ersten und zweiten Führungs- und Umlenkmittel in Form einer Kompressionsbeanspruchung zum Strukturelement (4) weitergeleitet wird, die imstande ist, ein Knicken des Strukturelements (4) hervorzurufen, was eine Annäherung des ersten und zweiten Führungs- und Umlenkmittels bewirkt.

2. Vorrichtung (2) nach Anspruch 1, **dadurch gekennzeichnet, dass** das Strukturelement (4) zylindrisch und hohl ist.

3. Vorrichtung (2) nach Anspruch 2, **dadurch gekennzeichnet, dass** das erste und zweite Führungs- und Umlenkmittel jeweils an den Enden (6, 7) des Strukturelements (4) befestigt sind.

4. Vorrichtung (2) nach Anspruch 3, **dadurch gekennzeichnet, dass** das erste und zweite Führungs- und Umlenkmittel außerhalb des Strukturelements (4) angeordnet sind.

5. Vorrichtung (2) nach einem der Ansprüche 2 bis 4, **dadurch gekennzeichnet, dass** das Strukturelement (4) derart bemessen ist, dass der Durchgang mindestens einer Ader des Kabels (3) im Strukturelement (4) ermöglicht wird.

6. Vorrichtung (2) nach einem der Ansprüche 2 bis 5, **dadurch gekennzeichnet, dass** das Strukturelement (4) einen etwa quadratischen Querschnitt aufweist.

7. Vorrichtung (2) nach einem der Ansprüche 1 bis 6, **dadurch gekennzeichnet, dass** das erste und/oder zweite Führungs- und Umlenkmittel jeweils eine erste und/oder eine zweite Führungs- und Umlenkachse (11, 13) aufweisen.

8. Vorrichtung (2) nach Anspruch 7, **dadurch gekennzeichnet, dass** jede Führungs- und Umlenkachse (11, 13) eine durchquerende Öffnung (12, 14) aufweist, die bemessen ist, um den Durchgang des Kabels (3) zu ermöglichen.

9. Installation (1), die eine Vorrichtung nach einem der Ansprüche 1 bis 8 und ein Kabel (3) aufweist, das von einem ersten und zweite Führungs- und Umlenkmittel derart geführt wird, dass ein Zug auf das Kabel (3) eine Kompressionsbeanspruchung generiert, die vom ersten und zweiten Führungs-und Umlenkmittel auf das Strukturelement (4) übertragen wird.

10. Installation (1) nach Anspruch 9 in Kombination mit Anspruch 2, **dadurch gekennzeichnet, dass** das Kabel (3) mindestens eine Schleife (15) im Strukturelement (4) beschreibt und sich von jedem seiner Enden (6, 7) außerhalb des Strukturelements (4) erstreckt.
